# EUROPEAN PATENT APPLICATION

(11) **EP 4 704 265 A1**
(43) Date of publication of application: **04.03.2026**
(21) Application number: 25193628.2
(22) Date of filing: 04.08.2025
(51) Int. Cl.: H01R 24/50, H01R 24/54, H04N 23/57

(54) **CONNECTOR**

(30) Priority: 26.08.2024 JP 2024144114
(71) Applicant: Hosiden Corporation, Yao-shi, Osaka 581-0071 (JP)
(72) Inventor: KAWANISHI, Takahide, Yao-Shi, Osaka, 5810071 (JP)
(74) Representative: LBP Lemcke, Brommer & Partner Patentanwälte mbB

(57) **Abstract**

A connector (60) includes: an electrically conductive terminal electrically connectable to an inner conductor of the coaxial cable; an insulating holder (62) in which the terminal is fitted and which holds the terminal; an electrically conductive cylindrical shell (63) electrically connectable to an outer conductor of the coaxial cable and covering the holder (62) from outside; and an electrically conductive shield (65) in contact with the cylindrical shell (63) to block an external electromagnetic wave. The shield (65) includes: a cylinder body (65a) in contact with a cylindrical end of the cylindrical shell (63); and a plurality of bent pieces (65b) each extending from an end of the cylinder body (65a) and bent radially outward. The cylindrical shell (63) includes: a cylindrical body (63a) covering the holder (62); and an annular flange (63b) extending radially outward from the cylindrical body (63a). The plurality of bent pieces (65b) are in contact with the flange (63b) and electrically connected to the cylindrical shell (63) with at least one press section (75) at a portion of the cylindrical shell (63) in-between.

## Description

### Technical Field

This disclosure relates to a connector to which a coaxial cable is electrically connectable.

### Background Art

A traditional plug may include a receptacle electrically connected to a substrate and a connector coaxially and electrically connected to the receptacle. Such a plug is disclosed in, for example, JP2022-174604A below.

JP2022-174604A discloses a plug ("coaxial connector" in the document) including a connector ("plug") and a receptacle. The connector includes a bar-shaped electrically conductive first contact, an insulating holder holding the first contact as inserted therein, an electrically conductive first cylindrical shell covering the holder from outside, and an electrically conductive shield in contact with the first cylindrical shell to block external electromagnetic waves. The receptacle includes an electrically conductive second contact electrically connected to a substrate and coaxially and electrically connectable to the first contact, an insulating casing containing the second contact, and an electrically conductive second cylindrical shell covering the casing from outside. The shield includes a barrel in contact with the first cylindrical shell, elastically deformable first bent sections extending from the barrel and curved radially outward, and second bent sections extending from the respective first bent sections and curved radially inward. The barrel includes a barrel body in contact with ring-shaped depressions in a cylindrical end of the first cylindrical shell and bent pieces extending from an end of the barrel body and bent radially outward. The bent pieces each have an end in contact with an inner end surface of a block section of a metal housing ("plug casing") which inner end surface is located toward an opening.

### Summary of Invention

The plug disclosed in JP2022-174604A includes a shield including a barrel body with two or more pressed protrusions pressed radially inward by press working into contact with respective outer surfaces of ring-shaped depressions in a cylindrical end of the first cylindrical shell. The pressed protrusions are arranged circumferentially at regular intervals in correspondence with the respective bent pieces. The barrel body is in close contact with the outer surface of the cylindrical end. The bent pieces each have an end in contact with an inner end surface of the housing which inner end surface is located toward an opening. This locks the shield with the first cylindrical shell. As described above, the bent pieces are in contact with the housing, whereas the barrel body, which includes two or more pressed protrusions, is in contact with the outer surface of the cylindrical end. This causes the housing, the first cylindrical shell, and the shield to be locked with and electrically connected to one another. Electronic components including such a plug are desirably compact and low-profile when mounted in a vehicle in order to be fitted in a designated space in the vehicle and save fuel (electricity).

Embodiments of this disclosure are each a compact, low-profile connector.

A connector according to this disclosure is a connector to which a coaxial cable is electrically connectable, the connector including: an electrically conductive terminal electrically connectable to an inner conductor of the coaxial cable; an insulating holder in which the terminal is fitted and which holds the terminal; an electrically conductive cylindrical shell electrically connectable to an outer conductor of the coaxial cable and covering the holder from outside; and an electrically conductive shield in contact with the cylindrical shell to block an external electromagnetic wave, the shield including: a cylinder body in contact with a cylindrical end of the cylindrical shell; and a plurality of bent pieces each extending from an end of the cylinder body and bent radially outward, the cylindrical shell including: a cylindrical body covering the holder; and an annular flange extending radially outward from the cylindrical body, the plurality of bent pieces being in contact with the flange and electrically connected to the cylindrical shell with at least one press section at a portion of the cylindrical shell in-between.

The above configuration allows the cylindrical shell to be fixed to the shield without a dedicated member such as the pressed protrusions disclosure JP2022-174604A. This in turn allows the connector to include a shorter cylinder body with unimpaired electrical properties, so that the connector is compact and low-profile.

A connector as an embodiment is configured such that the at least one press section includes a plurality of press sections arranged annularly.

If, for instance, the bent pieces are arranged circumferentially (or annularly) at an end of the cylinder body, the above configuration allows the cylindrical shell to press the bent pieces circumferentially (or annularly). This prevents the bent pieces from coming off the cylindrical shell easily.

A connector as an embodiment is configured such that the flange includes a step with a facing surface facing the plurality of bent pieces, the plurality of bent pieces are in contact with the facing surface, and the at least one press section is disposed on an upper surface of the step and pressing a circumferential outer edge of each of the plurality of bent pieces.

The above configuration allows the cylindrical shell to be pressed in an amount reduced in accordance with the difference in height between the flange and the upper surface, as compared to the case of including a press section at an inner edge of the flange. This facilitates forming the press section. The above configuration also allows the shield to be placed on the cylindrical shell with use of the step as a reference, facilitating the positioning of the shield relative to the cylindrical shell.

A connector as an embodiment is configured such that the flange has a facing surface facing the plurality of bent pieces and includes at least one protrusion each between two circumferentially mutually adjacent ones among the plurality of bent pieces, and the at least one press section is disposed on a top of the at least one protrusion and pressing a radial extension of each of the plurality of bent pieces.

The above configuration allows the flange to press each bent piece at a portion radially inward of its radially outward edge. This in turn allows the cylindrical shell to have a small outer diameter. The above configuration also allows the shield to be placed on the cylindrical shell with use of the protrusion as a reference, facilitating the positioning of the shield relative to the cylindrical shell.

### Brief Description of Drawings

Fig. 1 is a diagram schematically illustrating the configuration of a camera unit.
Fig. 2 is a vertical cross-sectional view of a camera module and a socket, with the camera module not inserted in the socket.
Fig. 3 is a vertical cross-sectional view of a camera module and a socket, with the camera module inserted in the socket.
Fig. 4 is an exploded perspective view of a socket.
Fig. 5 is an exploded perspective view of a socket.
Fig. 6 is a plan view of a connector with bent pieces pressed by respective press sections.
Fig. 7 is a cross-sectional view taken along line VII-VII in Fig. 6.
Fig. 8 is a plan view of a connector for an alternative embodiment with bent pieces pressed by respective press sections.
Fig. 9 is a cross-sectional view taken along line IX-IX in Fig. 8.

### Description of Embodiments

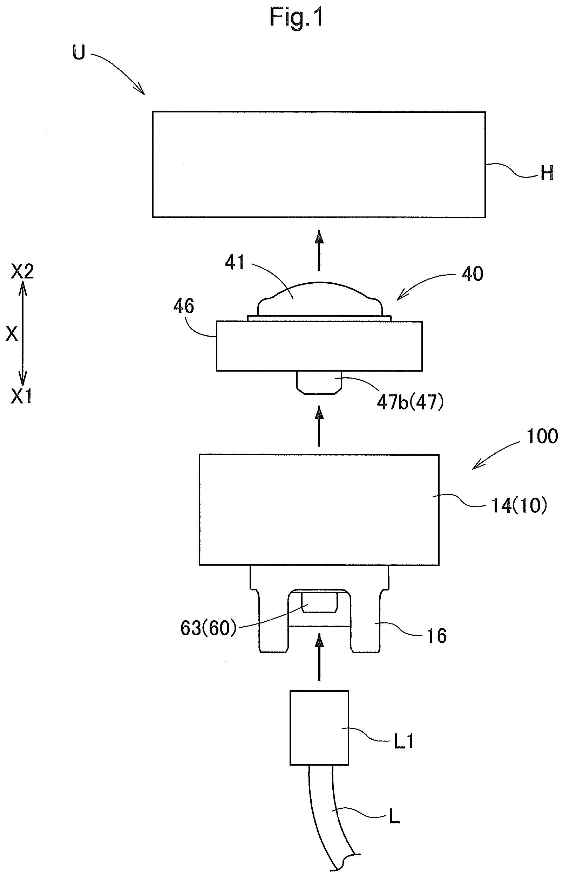

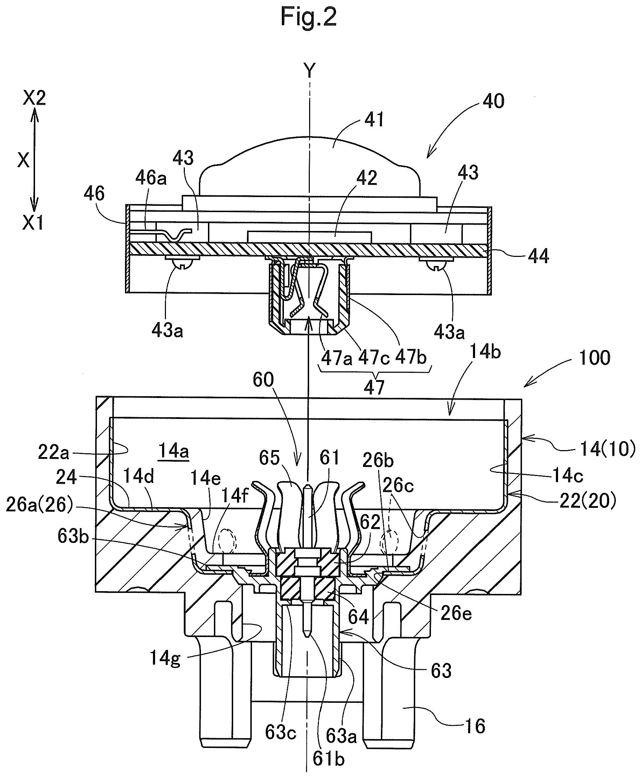

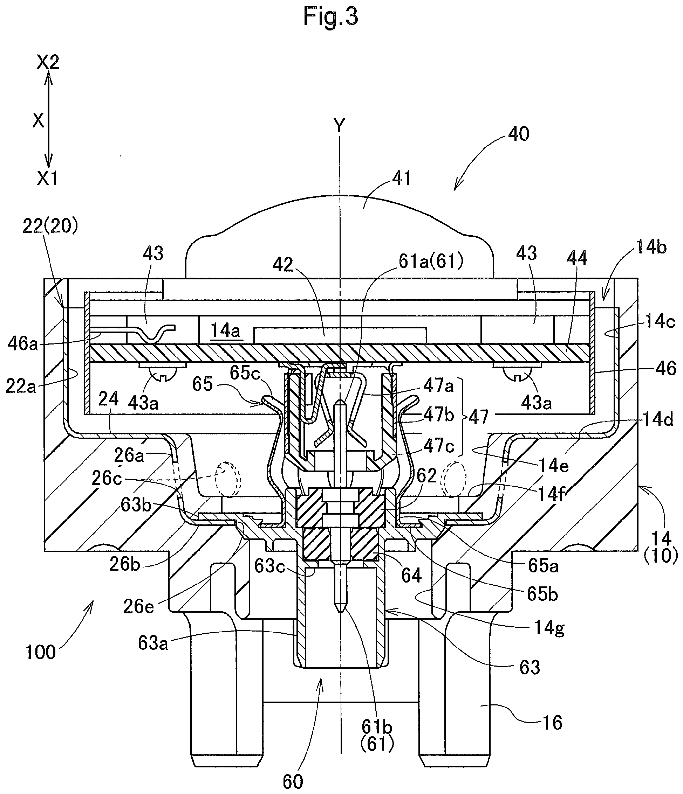

This disclosure provides a compact, low-profile connector. The description below deals with a connector 60 as an embodiment. Fig. 1 is a diagram schematically illustrating the configuration of a camera unit U including a socket 100 including a connector 60. Fig. 2 is a vertical cross-sectional view of a camera module 40 and the socket 100, with the camera module 40 not inserted in the socket 100. Fig. 3 is a vertical cross-sectional view of the camera module 40 and the socket 100, with the camera module 40 inserted in the socket 100.

As illustrated in Fig. 1, the connector 60 is provided for the socket 100 and electrically connectable to a coaxial cable L. The connector 60 is not limited to the embodiment below, and may be altered variously without departing from its scope.

The socket 100 for the present embodiment is included in a camera unit U mountable in a vehicle (that is, an in-vehicle camera). The camera unit U is electrically connectable to an in-vehicle monitor (not illustrated in the drawings) or in-vehicle electronic control unit (ECU) with use of a coaxial cable L. The camera unit U may alternatively be mounted in, for example, a bicycle or a drone other than a vehicle.

The coaxial cable L is a communication cable for transmitting high-frequency signals. The coaxial cable L includes an inner conductor, an outer conductor coaxial with the inner conductor, and a dielectric (insulator) therebetween. The inner conductor is in the form of a bundle of copper wires. The outer conductor is in the form of a mesh of copper wires around the inner conductor, and functions as a shield for preventing exit of high-frequency signals and entry of electric waves. The coaxial cable L transmits high-frequency signals from the camera unit U to the monitor or in-vehicle ECU, and electric power from the monitor to the camera unit U. The coaxial cable L has a leading end provided with a plug L1 through which the coaxial cable L is electrically connectable to the socket 100.

The camera unit U includes a camera housing H, a camera module 40 in the camera housing H, and a socket 100 connected to the camera module 40. The camera housing H is made of an electrically conductive metal. The camera unit U is usable in any orientation. The description below uses the expression "axis X" to refer to the axis connecting the camera module 40 to the socket 100, "direction X1" to refer to the direction from the camera module 40 to the socket 100, and "direction X2" to refer to the direction opposite to the direction X1.

The camera module 40, as illustrated in Figs. 1 to 3, includes an optical system 41, a substrate 44, a camera shield 46, and a receptacle 47. The optical system 41 includes at least one lens configured to receive light from an object. The camera module 40 includes, in the direction X2 from the substrate 44, the optical system 41 and an imaging element 42 in the form of, for example, a charge coupled device (CCD) or complementary metal oxide semiconductor (CMOS) device configured to output electric signals on the basis of light collected by the optical system 41. The camera module 40 includes on the substrate 44 an electronic circuit configured to drive the imaging element 42 and process the electric signals from the imaging element 42. The substrate 44 is rectangular. The receptacle 47 is on that face of the substrate 44 which is opposite to the imaging element 42. The receptacle 47 is configured to output high-frequency signals resulting from the electronic circuit processing the electric signals from the imaging element 42. The optical system 41 has a back face provided with two or more (four for the present embodiment) bosses 43 extending in the direction X1. The substrate 44 is fixed to the bosses 43 with use of respective screws 43a, so that the substrate 44 is held by the optical system 41.

The camera shield 46 is in the form of a rectangular barrel made of a metal such as iron. The camera shield 46 includes two inwardly bent contact pieces 46a near respective diagonally opposite corners and each in the form of a bend of a portion of a face of the camera shield 46.

The optical system 41, the imaging element 42, the substrate 44, and the receptacle 47 are fixed to one another. The substrate 44 is fixed to the bosses 43 with use of respective screws 43a. The camera shield 46 thus contains the imaging element 42, the substrate 44, and a part of the receptacle 47, meaning that the camera shield 46 provides an outer surface of the camera module 40.

The receptacle 47 includes a first contact 47a, a ground contact 47b, and an insulator 47c. The first contact 47a transmits high-frequency signals. The substrate 44 is provided with a ground wire with a ground potential. Bringing the ground wire into contact with the contact pieces 46a for electric connection electrically connects the ground wire and the ground contact 47b to the camera shield 46, so that they each have a ground potential. The insulator 47c electrically insulates the first contact 47a from the ground contact 47b.

The description below deals with the configuration of the socket 100. As illustrated in Figs. 1 to 3, the socket 100 includes a housing 10, a socket shield 20, and a connector 60. The housing 10 is made of an insulator such as resin, and includes a barrel 14 and a fitting section 16 extending from the barrel 14 in the direction X1. The barrel 14 is in the shape of a rectangular barrel as viewed along the axis X (hereinafter also referred to as "plan view"). The description below uses the term "central axis Y" to refer to an axis parallel to the axis X and extending through the point of intersection of the diagonals of the rectangle in a plan view, "opening 14b" to refer to that end of the barrel 14 which is in the direction X2, "internal space 14a" to refer to the space defined by the barrel 14 and connected to the opening 14b, and "inner wall surface 14c" to refer to that face of the wall as the barrel 14 which faces the internal space 14a.

As illustrated in Figs. 2 and 3, the camera module 40 is insertable through the opening 14b into the internal space 14a in such an orientation that the camera shield 46 faces the barrel 14. With the camera module 40 inserted in the barrel 14, the camera shield 46 faces the inner wall surface 14c across the socket shield 20.

The barrel 14 has at an end in the direction X1 a first bottom 14d that has at the center a depression 14e depressed in the direction X1 and having a circular shape in a plan view. The depression 14e has as its bottom a second bottom 14f that has at the center a first through hole 14g through which the connector 60 is provided for the second bottom 14f. The connector 60 extends from the internal space 14a to the fitting section 16 and has an axis that coincides with the central axis Y.

The socket shield 20 is in the form of a press-worked plate made of a metal such as iron. The socket shield 20 includes a barrel-shaped plate section 22 in the shape of a rectangular barrel in a plan view, a bottom plate section 24 at an end of the barrel-shaped plate section 22 in the direction X1, and a depressed plate section 26 disposed at the center of the bottom plate section 24 and depressed in the direction X1.

The depressed plate section 26 is circular in a plan view, and includes a side plate 26a and a bottom plate 26b. The side plate 26a is between the bottom plate section 24 and the bottom plate 26b and in the form of a barrel in the shape of a circular truncated cone with a diameter that becomes smaller in the direction X1. The side plate 26a has two or more (eight for the present embodiment) second through holes 26c in the form of circular holes arranged circumferentially about the central axis Y at regular intervals.

The bottom plate 26b is in the form of a ring-shaped plate and has a third through hole 26e in the form of a circular hole in a radially inward portion through which third through hole 26e the connector 60 extends.

The barrel-shaped plate section 22 has a surface opposite to its inner surface 22a which surface is in close contact with the inner wall surface 14c of the barrel 14 of the housing 10. The bottom plate section 24 has a surface opposite to the internal space 14a which surface is in close contact with the first bottom 14d of the housing 10. The barrel-shaped plate section 22 and the bottom plate section 24 each have an exposed surface facing the internal space 14a. The depressed plate section 26 is inside the housing 10. The second through holes 26c are filled with the resin of the housing 10, so that the socket shield 20 is in close contact with and fixed to the housing 10. The third through hole 26e is not blocked by the housing 10.

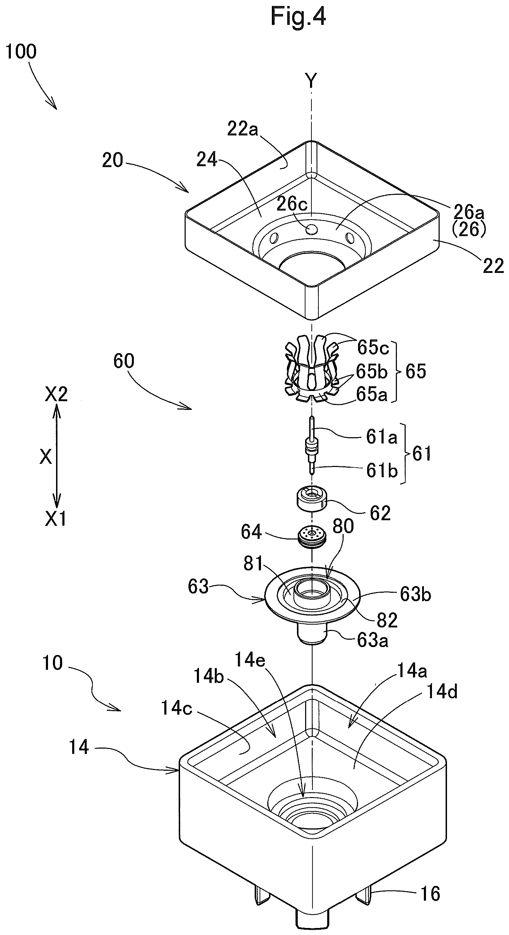

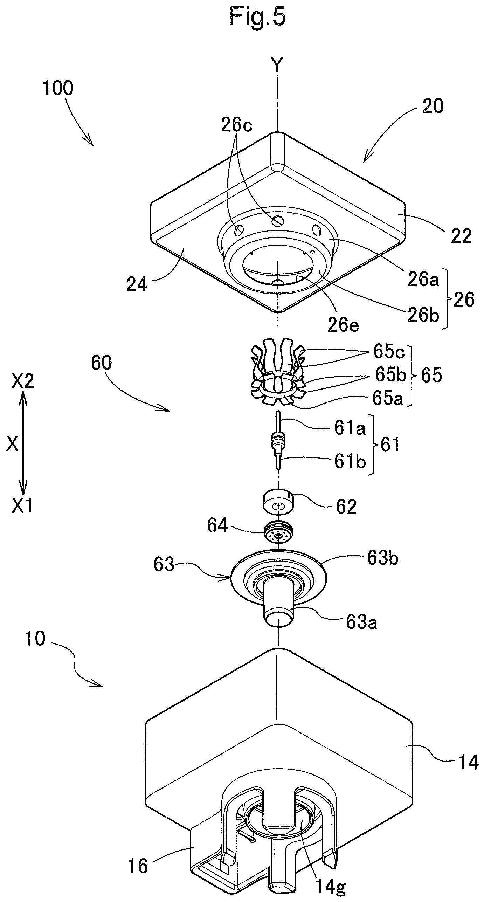

As illustrated in Figs. 4 and 5, the connector 60 includes a terminal 61, a holder 62, a cylindrical shell 63, a bush 64, and a shield 65. The terminal 61 is made of a material such as an electrically conductive metal. The terminal 61 is in the form of a bar extending along the axis X and having an axis that coincides with the central axis Y. The terminal 61 has a first contact end 61a electrically connectable to the first contact 47a of the receptacle 47 of the camera module 40 and a second contact end 61b electrically connectable to the inner conductor of the coaxial cable L through the plug L1. The holder 62 is made of an insulating resin material and disposed on an outer surface of an intermediate portion of the terminal 61 along the axis X. The holder 62 is insert-molded to be integral with the terminal 61. The holder 62 holds the terminal 61 as inserted therein. The bush 64 is made of an elastic material such as rubber, and has at the center a through hole extending along the axis X through which through hole the terminal 61 is insertable. The bush 64 prevents, for example, entry of water at the second contact end 61b.

The cylindrical shell 63 is made of an electrically conductive metal and electrically connectable to the outer conductor of the coaxial cable L. The cylindrical shell 63 covers the holder 62 from outside. The cylindrical shell 63 includes a cylindrical body 63a in the form of a substantial cylinder that covers the holder 62 and a flange 63b in the form of a ring-shaped plate extending from the cylindrical body 63a radially outward relative to the central axis Y. As illustrated in Figs. 2 and 3, the cylindrical shell 63 includes a third support 63c inside the cylindrical body 63a and in the form of a plate with a hole at the center through which hole the terminal 61 is insertable. The bush 64 is in the direction X2 relative to the third support 63c and in contact with the third support 63c. The holder 62 is in the direction X2 relative to the bush 64. The holder 62 is slightly larger in outer diameter than the bush 64. The cylindrical body 63a includes between a portion at which the bush 64 is disposed and a portion at which the holder 62 is disposed a step equivalent to the difference in outer diameter. The holder 62 is supported by the step and applies no pressure to the bush 64. The second contact end 61b is exposed in the direction X1 relative to the third support 63c. The cylindrical body 63a has a leading end in the fitting section 16 of the housing 10.

As illustrated in Fig. 4, the flange 63b has a step 80 that is, for the present embodiment, circular in a plan view and easily formable through cutting work. While the shield 65 includes bent pieces 65b, the step 80 has as its bottom surface a facing surface 81 facing and in contact with the bent pieces 65b. The flange 63b has in the direction X1 a surface with an edge in contact with that surface of the bottom plate 26b of the depressed plate section 26 of the socket shield 20 which surface is in the direction X2, so that the cylindrical shell 63 is electrically connected to the socket shield 20. The portion of the contact between the flange 63b and the bottom plate 26b and its surroundings are inside the housing 10. The cylindrical shell 63 is thus in close contact with and fixed to the housing 10 and the socket shield 20.

The shield 65 is made of an elastic, electrically conductive metal and in contact with the cylindrical shell 63 to block external electromagnetic waves. The shield 65 includes a ring-shaped cylinder body 65a, bent pieces 65b, and connection sections 65c. The bent pieces 65b are each a radially outward bend at an end of the cylinder body 65a. The shield 65 for the present embodiment includes two or more (eight for the present embodiment) bent pieces 65b disposed at an end of the cylinder body 65a in the direction X1 (that is, toward the cylindrical shell 63) and arranged circumferentially at regular intervals. The shield 65 includes two or more (eight for the present embodiment) connection sections 65c disposed at an end of the cylinder body 65a in the direction X2 (that is, toward the internal space 14a) and arranged circumferentially at regular intervals. The bent pieces 65b are opposite to the connection sections 65c across the cylinder body 65a, and coincide with the respective connection sections 65c in a plan view.

As illustrated in Fig. 3, the cylinder body 65a has a surface parallel to the axis X and has in the direction X1 an end in contact with a cylindrical end of the cylindrical shell 63. In other words, the cylinder body 65a is in close contact with an outer surface of that end of the cylindrical body 63a which is in the direction X2. This fixes and electrically connects the shield 65 to the cylindrical shell 63. The bent pieces 65b are arranged circumferentially at regular intervals, and extend perpendicularly to the cylinder body 65a and radially outward relative to the central axis Y. The bent pieces 65b are elastically deformed into the step 80 of the flange 63b and in contact with the facing surface 81 as the bottom surface of the step 80. With the bent pieces 65b in contact with the facing surface 81, the step 80 has an upper surface 82 further in the direction X2 than the bent pieces 65b.

The connection sections 65c are each in the form of a plate extending along the axis X from that end of the cylinder body 65a which is in the direction X2. Specifically, the connection sections 65c are each in the shape of a wave along the axis X: They are so bent as to extend radially outward from the cylinder body 65a to expand, then radially inward to shrink, and finally radially outward again to expand.

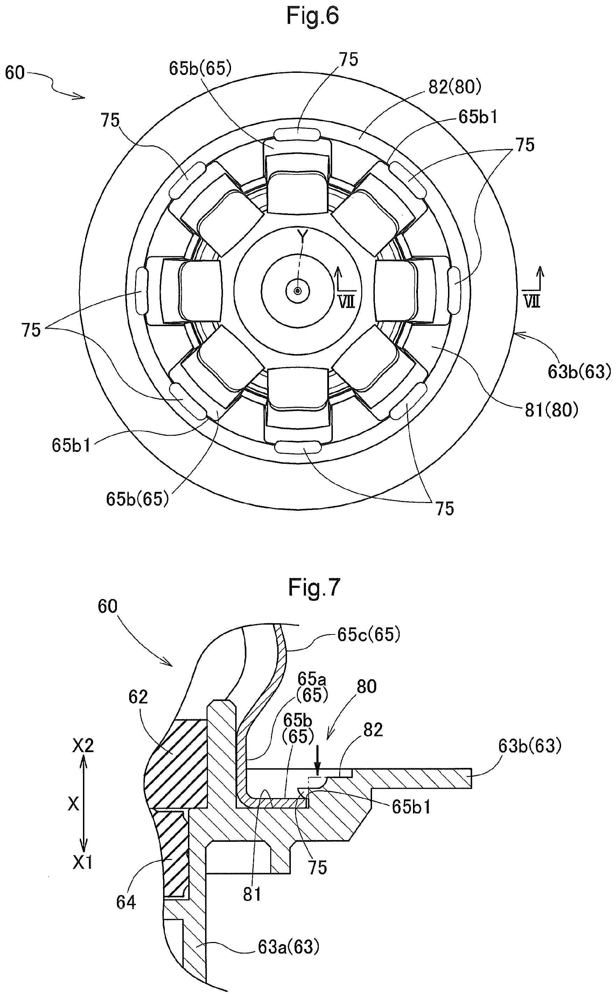

While the cylindrical shell 63 is provided with first press sections 75 (which is an example press section), the bent pieces 65b are electrically connected to the cylindrical shell 63 through the first press sections 75. Fig. 6 is a plan view of the connector 60 with the bent pieces 65b pressed by the respective first press sections 75. Fig. 7 is a cross-sectional view taken along line VII-VII in Fig. 6. The step 80 for the present embodiment is in the form of a step with a bottom surface, that is, the facing surface 81, and the upper surface 82. The first press sections 75 are at a radially inward end of the upper surface 82.

The first press sections 75 result from pressing the radially inward end of the upper surface 82. The first press sections 75 press the circumferential outer edge 65b1 of each bent piece 65b to press the bent pieces 65b. This allows the bent pieces 65b to be electrically connected to the cylindrical shell 63 with the respective first press sections 75 in-between.

As illustrated in Fig. 6, the shield 65 for the present embodiment includes two or more (eight for the present embodiment) bent pieces 65b disposed at an end of the cylinder body 65a in the direction X1 and arranged circumferentially at regular intervals. The cylindrical shell 63 includes two or more (eight for the present embodiment) annularly arranged first press sections 75 pressing the respective bent pieces 65b.

### Alternative Embodiments

The cylindrical shell 63 for the embodiment described above includes eight annularly arranged first press sections 75. The cylindrical shell 63 may alternatively include a single first press section 75 or, for example, radially arranged two to seven or nine or more first press sections 75.

The step 80 for the embodiment described above has a facing surface 81 and an upper surface 82. The step 80 may alternatively omit its upper surface 82, in which case the first press sections 75 may result from pressing the inner circumferential edge of the flange 63b. The step 80 may alternatively have at least one surface other than the facing surface 81 and the upper surface 82.

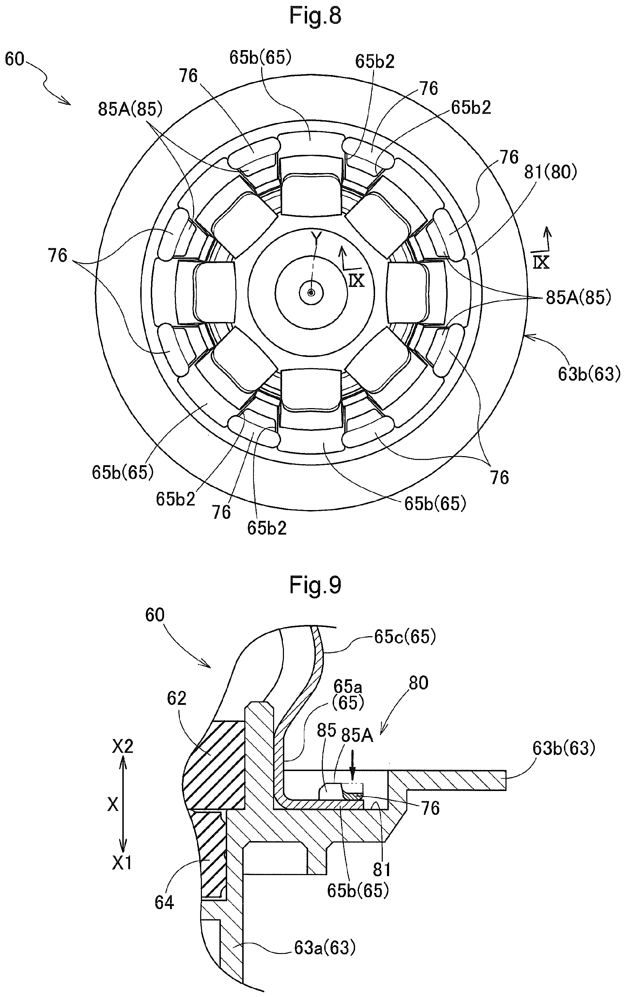

The bent pieces 65b for the embodiment described above are in contact with the facing surface 81 and electrically connected to the cylindrical shell 63 with respective first press sections 75 in-between, the first press sections 75 being disposed on the upper surface 82 and pressing the circumferential outer edge 65b1 of each bent piece 65b. The connector 60 may alternatively be configured as illustrated in Figs. 8 and 9. Fig. 8 is a plan view of a connector 60 for an alternative embodiment with the bent pieces 65b pressed by respective second press section 76. Fig. 9 is a cross-sectional view taken along line IX-IX in Fig. 8. This alternative embodiment is configured as follows: The flange 63b includes on a facing surface 81 facing the bent pieces 65b protrusions 85 each disposed between two circumferentially mutually adjacent bent pieces 65b and each having a top 85A with a second press section 76 (which is an example press section) pressing a radial extension 65b2 of the corresponding bent piece 65b. The bent pieces 65b are electrically connected to the cylindrical shell 63 with the respective second press sections 76 in-between. This configuration also allows the cylindrical shell 63 to be electrically connected to the shield 65 easily. The above cylindrical shell 63, which includes protrusions 85, is producible by die-casting.

The embodiment described above may alternatively be configured such that the bent pieces 65b are electrically connected to the cylindrical shell 63 with first and second press sections 75 and 76 in-between, the first press sections 75 being disposed on the upper surface 82 and pressing the circumferential outer edge 65b1 of each bent piece 65b, the second press sections 76 being disposed on the respective tops 85A and pressing the radial extension 65b2 of each bent piece 65b.

This disclosure is applicable to a connector to which a coaxial cable is electrically connectable.

## Claims

1. A connector (60) to which a coaxial cable (L) is electrically connectable,
**characterized by**
an electrically conductive terminal (61) electrically connectable to an inner conductor of the coaxial cable (L);
an insulating holder (62) in which the terminal (61) is fitted and which holds the terminal (61);
an electrically conductive cylindrical shell (63) electrically connectable to an outer conductor of the coaxial cable (L) and covering the holder (62) from outside; and
an electrically conductive shield (65) in contact with the cylindrical shell (63) to block an external electromagnetic wave,
the shield (65) including:
a cylinder body in contact with a cylindrical end of the cylindrical shell (63); and
a plurality of bent pieces (65b) each extending from an end of the cylinder body and bent radially outward,
the cylindrical shell (63) including:
a cylindrical body (63a) covering the holder (62); and
an annular flange (63b) extending radially outward from the cylindrical body (63a),
the plurality of bent pieces (65b) being in contact with the flange (63b) and electrically connected to the cylindrical shell (63) with at least one press section (75, 76) at a portion of the cylindrical shell (63) in-between.

2. The connector (60) according to claim 1, wherein
the at least one press section (75, 76) includes a plurality of press sections (75, 76) arranged annularly.

3. The connector (60) according to claim 1 or 2, wherein
the flange (63b) includes a step (80) with a facing surface (81) facing the plurality of bent pieces (65b),
the plurality of bent pieces (65b) are in contact with the facing surface (81), and
the at least one press section (75, 76) is disposed on an upper surface (82) of the step (80) and pressing a circumferential outer edge of each of the plurality of bent pieces (65b).

4. The connector (60) according to claim 1 or 2, wherein
the flange (63b) has a facing surface (81) facing the plurality of bent pieces (65b) and includes at least one protrusion (85) each between two circumferentially mutually adjacent ones among the plurality of bent pieces (65b), and
the at least one press section (75, 76) is disposed on a top of the at least one protrusion (85) and pressing a radial extension of each of the plurality of bent pieces (65b).
